(19) Europäisches Patentamt / European Patent Office / Office européen des brevets

(11) **EP 4 481 877 A1**

(12) **EUROPEAN PATENT APPLICATION**
published in accordance with Art. 153(4) EPC

(43) Date of publication:
**25.12.2024   Bulletin 2024/52**

(21) Application number: **22925713.4**

(22) Date of filing: **07.12.2022**

(51) International Patent Classification (IPC):
**H01M 10/0568** (2010.01)

(52) Cooperative Patent Classification (CPC):
Y02E 60/10

(86) International application number:
**PCT/CN2022/137121**

(87) International publication number:
**WO 2023/151362 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2022   CN 202210134125**

(71) Applicant: **Tsinghua University
Beijing 100084 (CN)**

(72) Inventors:
• **ZHANG, Yuegang
  Beijing 100084 (CN)**
• **XIAO, Jianhua
  Beijing 100084 (CN)**
• **FAN, Haiyan
  Beijing 100084 (CN)**
• **ZHANG, Xinxin
  Beijing 100084 (CN)**
• **LIN, Qiyuan
  Beijing 100084 (CN)**

(74) Representative: **Vossius & Partner
Patentanwälte Rechtsanwälte mbB
Siebertstrasse 3
81675 München (DE)**

(54) **ELECTROLYTE FOR RECHARGEABLE MAGNESIUM BATTERY, PREPARATION METHOD FOR ELECTROLYTE, AND RECHARGEABLE MAGNESIUM BATTERY**

(57)    The present application provides an electrolytic solution for rechargeable magnesium batteries, a method for preparing the same, and a rechargeable magnesium battery, wherein the electrolytic solution comprises an electrolyte salt and a non-aqueous solvent, the electrolyte salt comprising $[Mg_xM_{2x-1}P_y]$ $[Mg(OR^F)_3Q_z]$, in which x represents an integer between 1 and 6, y represents an integer between 1 and 6, z represents an integer between 0 and 6, M represents a monovalent anion, and each $R^F$ independently represents partially fluorinated or perfluorinated C1-C6 aliphatic hydrocarbon group, or partially fluorinated or perfluorinated C6-C12 aromatic hydrocarbon group, and P and Q represent an ligand. The electrolytic solution provided by the present application has excellent electrochemical properties, and at the same time the interfacial stability between the electrolytic solution and the negative electrode is also high.

**FIG. 2**

**Description**

**CROSS-REFERENCE TO RELATED APPLICATION**

This application claims priority to Chinese Patent Application No. 202210134125.8 entitled "Electrolytic solution for rechargeable magnesium batteries, method for preparing the same, and rechargeable magnesium batteries comprising the same" and filed on February 14, 2022, which is incorporated herein by reference in its entirety.

**TECHNICAL FIELD**

The present application belongs to the field of electrochemical technology, and specifically relates to an electrolytic solution for rechargeable magnesium batteries, a method for preparing the same, and rechargeable magnesium batteries.

**BACKGROUND**

The development of rechargeable secondary batteries is the key to solving the problem of renewable energy storage. In recent years, due to that magnesium metal has the advantages of abundant reserves, low cost, environmental friendliness, stable physicochemical properties, high theoretical volumetric specific capacity ($3833\,\text{mAh/cm}^3$) and the like, rechargeable magnesium batteries with magnesium metal and the like as the negative electrode have become one of the new types of energy storage systems that are highly promising for development at present. However, the development of rechargeable magnesium batteries has been very slow, in which the electrolytic solution is one of the key factors restricting its development.

In view of this, it is necessary to provide an electrolytic solution suitable for use in a rechargeable magnesium battery.

**SUMMARY**

The present application provides an electrolytic solution for rechargeable magnesium batteries, a method for preparing the same, and a rechargeable magnesium battery, wherein the electrolytic solution has excellent electrochemical properties, and at the same time the interfacial stability between the electrolytic solution and the negative electrode is high.

A first aspect of the present application provides an electrolytic solution for rechargeable magnesium batteries, comprising an electrolyte salt and a non-aqueous solvent, the electrolyte salt comprising $[Mg_xM_{2x-1}P_y]$ $[Mg(OR^F)_3Q_z]$, in which x represents an integer between 1 and 6, y denotes an integer between 1 and 6, z represents an integer between 0 and 6, M represents a monovalent anion, each $R^F$ independently represents partially fluorinated or perfluorinated C1-C6 aliphatic hydrocarbon group, partially fluorinated or perfluorinated C6-C12 aromatic hydrocarbon group, and P and Q represent a ligand.

The inventors of the present application unexpectedly found in the course of researching the electrolytic solution for rechargeable magnesium batteries that when the electrolytic solution comprises $[Mg_xM_{2x-1}P_y]$ $[Mg(OR^F)_3Q_z]$, the electrolytic solution is able to have excellent electrochemical performance, and at the same time the interfacial stability between the electrolytic solution and the negative electrode is high, and consequently, the rechargeable magnesium battery employing the same is able to have excellent electrochemical performance and long cycle life.

In some embodiments of the present application, the cation of the electrolyte salt comprises $[Mg_xM_{2x-1}P_y]^+$ and the anion comprises $[Mg(OR^F)_3Q_z]^-$.

In some embodiments of the present application, P and Q are the same.

In some embodiments of the present application, M represents one or more of $F^-$, $Cl^-$, $Br^-$, $I^-$, $HMDS^-$, $CF_3SO_3^-$, or $(CF_3SO_2)_2N^-$. Optionally, M represents one or more of $F^-$, $Cl^-$, $Br^-$, or $I^-$.

In some embodiments of the present application, each $R^F$ independently represents partially fluorinated or perfluorinated C1-C6 aliphatic alkyl group, phenyl group, C6-C12 alkylphenyl group, or C6-C12 phenylalkyl group. Optionally, each $R^F$ independently represents partially fluorinated or perfluorinated methyl, ethyl, n-propyl, isopropyl, n-butyl, tert-butyl, phenyl, methylphenyl, ethylphenyl, n-propylphenyl, tert-butylphenyl, phenylmethyl, or phenylethyl.

In some embodiments of the present application, the non-aqueous solvent, the ligand P, the ligand Q each independently represents one or more of an ionic liquid, or a first organic solvent.

In some embodiments of the present application, the ionic liquid comprises one or more of an imidazole ionic liquid, a piperidine ionic liquid, a pyrrole ionic liquid.

In some embodiments of the present application, the imidazole ionic liquid comprises one or more of 1-ethyl-3-methylimidazolium tetrafluoroborate, 1-ethyl-3-methylimidazolium hexafluorophosphate, or 1-ethyl-3-methylimidazolium bis(trifluoromethanesulfonyl)imide.

In some embodiments of the present application, the pyrrole ionic liquid comprises N-butyl-N-methylpyrrolidinium bis(trifluoromethanesulfonyl)imide.

In some embodiments of the present application, the piperidine ionic liquid comprises N-butyl-N-methylpiperidinium bis(trifluoromethanesulfonyl)imide.

In some embodiments of the present application, the first organic solvent comprises one or more of an ether solvent, an imidazole solvent, a pyridine solvent, a sulfone solvent, an ester solvent, an aromatic hydrocarbon solvent, an amide solvent, or a nitrile solvent.

In some embodiments of the present application, the ether solvent comprises one or more of dioxane, tetrahydrofuran, ethylene glycol dimethyl ether, diethylene glycol dimethyl ether, triethylene glycol dimethyl ether, tetraethylene glycol dimethyl ether, or polyethylene glycol dimethyl ether.

In some embodiments of the present application, the pyridine solvent comprises one or more of pyridine, 2-methylpyridine, 3-methylpyridine, 4-methylpyridine, 2,6-dichloropyridine, or 2-aminopyridine.

In some embodiments of the present application, the ester solvent comprises one or more of vinyl carbonate, or ethyl acetate.

In some embodiments of the present application, the non-aqueous solvent, the ligand P, and the ligand Q are the same.

In some embodiments of the present application, the concentration of $[Mg_xM_{2x-1}P_y]\,[Mg(OR^F)_3Q_z]$ in the electrolytic solution is from 0.1 mol/L to 1.2 mol/L. Optionally, the concentration of $[Mg_xM_{2x-1}P_y]\,[Mg(OR^F)_3Q_z]$ is from 0.1 mol/L to 0.8 mol/L.

A second aspect of the present application provides a method for preparing the electrolytic solution of the first aspect of the present application, comprising the following steps: S100, providing $Mg(OR^F)_2$, anhydrous $MgM_2$, and a non-aqueous solvent; and S200, reacting the $Mg(ORF)_2$, the anhydrous $MgM_2$, and the non-aqueous solvent by mixing them at 25°C to 100°C to obtain the electrolytic solution.

In some embodiments of the present application, in S200, the reaction time is from 3h to 48h.

In some embodiments of the present application, the molar ratio of $Mg(OR^F)_2$ to anhydrous $MgM_2$ is 1:(0.5 to 3.0), optionally 1:(0.8 to 2.0).

In some embodiments of the present application, $Mg(OR^F)_2$ is obtained by the following method: mixing $HOR^F$ and $MgR_2$ in a second organic solvent and reacting at 0°C to 200°C, and obtaining $Mg(OR^F)_2$ after drying and removing the second organic solvent, wherein $MgR_2$ represents a magnesium alcoholate or an alkyl magnesium salt.

In some embodiments of the present application, $MgR_2$ is selected from magnesium methoxide, magnesium ethoxide, magnesium propoxide, dibutyl magnesium or ethyl magnesium chloride.

In some embodiments of the present application, the second organic solvent comprises one or more of an ether solvent, an imidazole solvent, a pyridine solvent, a sulfone solvent, an ester solvent, an aromatic hydrocarbon solvent, an amide solvent, or a nitrile solvent.

A third aspect of the present application provides a rechargeable magnesium battery comprising the electrolytic solution of the first aspect of the present application, or the electrolytic solution prepared by the method of the second aspect of the present application.

The present application has the following beneficial effects:

The electrolytic solution of the present application has excellent electrochemical properties, and at the same time the interfacial stability between the electrolytic solution and the negative electrode is high.

The method for preparing the electrolytic solution of the present application is simple and can meet the requirements for commercialization of rechargeable magnesium batteries.

The rechargeable magnesium battery using the electrolytic solution of the present application can have excellent electrochemical performance and long cycle life.

## DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.

FIG. 1 illustrates the mass spectrometry test results of the electrolytic solution prepared in Example 1, with FIG. 1(a) showing the test results of the anion moiety of the electrolytic solution and FIG. 1(b) showing the test results of the cation moiety of the electrolytic solution.

FIG. 2 illustrates the mass spectrometry test results of the anion moiety of the electrolytic solution prepared in Example 1.

FIG. 3 illustrates a comparison of the Raman spectroscopy test results of the electrolytic solution prepared in Example 1, in Comparative Example 2 with the THF solvent, wherein I represents the electrolytic solution prepared in Example 1, II represents the electrolytic solution prepared in Comparative Example 2, and III represents the THF solvent.

FIG. 4 illustrates a linear sweep voltammetry LSV curve of the Mg//Pt half-cell assembled with the electrolytic solution prepared in Example 1.

FIG. 5 illustrates a cyclic voltammetry CV curve of the Mg//Pt half-cell assembled with the electrolytic solution prepared in Example 1.

FIG. 6 illustrates a cyclic deposition/dissolution potential curve of the Mg//Mg symmetric half-cell assembled with the electrolytic solution prepared in Example 1.

FIG. 7 illustrates the electrochemical impedance spectra obtained by fitting Nyquist plot via an equivalent circuit for the Mg//Mg symmetric half-cell assembled with the electrolytic solution prepared in Example 1.

FIG. 8 illustrates a first-cycle charging/discharging curve of the magnesium ion battery assembled with the electrolytic solution prepared in Example 1.

FIG. 9 illustrates a cyclic curve of the magnesium ion battery assembled with the electrolytic solution prepared in Example 1.

## DETAILED DESCRIPTION

In order to make the purpose, the technical solution and beneficial technical effect of the present application clearer, the present application is described in further detail in combination with the following embodiments. It should be understood that the embodiments described in this specification are only for the purpose of explaining the present application and are not intended to limit the present application.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

In the context herein, it is to be noted that, unless otherwise indicated, "above" and "below" are inclusive of the present number, "more" in the phrase 'one or more' means two or more.

In the present application, the term "aliphatic hydrocarbon group" means a chain group having the basic properties of an aliphatic compound, including an alkyl group, an alkenyl group, and an alkynyl group. The above-mentioned groups can be either liner or branched. In various embodiments, the C1-C6 aliphatic hydrocarbon group is the aliphatic hydrocarbon group that may contain 1 to 6 carbon atoms.

In the present application, the term "aromatic hydrocarbon group" refers to a carbon ring system having an aromatic nature, the carbon ring of which may be monocyclic, polycyclic or fused cyclic, and the carbon ring may or may not contain a substituent group, wherein the substituent group may be one or more of an alkyl group, an alkenyl group, or an alkynyl group, and the number of the substituent group may be one or more. In various embodiments, the C6-C12 aromatic hydrocarbon group is an aromatic hydrocarbon group that may contain 6 to 12 carbon atoms.

In the present application, the term "partially fluorinated or perfluorinated C1-C6 aliphatic hydrocarbon group" means that at least one hydrogen atom in the C1-C6 aliphatic hydrocarbon group is substituted by a fluorine atom.

In the present application, the term "partially fluorinated or perfluorinated C6-C12 aromatic hydrocarbon group" means that at least one hydrogen atom in the C6-C12 aromatic hydrocarbon group is substituted by a fluorine atom, wherein at least one hydrogen atom in the carbon ring is substituted by a fluorine atom, or a substituent group attached to the carbon ring (e.g., one or more of an alkyl group, an alkenyl group, an alkynyl group) is substituted by a fluorine atom, or at least one hydrogen atom in both the carbon ring and the substituent group attached thereto is substituted with a fluorine atom. For example, "partially fluorinated or perfluorinated methylphenyl" indicates that the fluorine atom may be located on at least one of the methyl or benzene ring structure.

In the context of the present application, the substituents of the compounds are disclosed in groups or ranges. It is expressly expected that such descriptions include each of the individual subcombinations of members of these groups and ranges. For example, it is expressly anticipated that the term "C1-C6 aliphatic hydrocarbon group" alone discloses C1, C2, C3, C4, C5, C6, C1 to C6, C1 to C5, C1 to C4, C1 to C3, C1 to C2, C2 to C6, C2 to C5, C2 to C4, C2 to C3, C3 to C6, C3 to C5, C3 to C4, C4 to C6, C4 to C5 and C5 to C6 aliphatic hydrocarbon groups.

The rechargeable magnesium battery mainly comprises a positive electrode, a negative electrode and an electrolytic solution, wherein the positive electrode comprises a positive electrode material capable of intercalating and deintercalating magnesium ions, and the negative electrode is usually magnesium metal or magnesium alloy or the like. The working principle of the rechargeable magnesium battery is usually as follows: when the battery is charged, the magnesium ions are deintercalated from the positive electrode material, and deposited on the surface of the negative electrode in the form of elemental magnesium through the electrolytic solution; when the battery is discharged, the magnesium ions are dissolved out of the negative electrode and migrated to the surface of the positive electrode through the electrolytic solution and then intercalated in the positive electrode material.

Due to that magnesium ions have high charge density and low reduction potential (-2.37V vs. standard hydrogen electrode), most organic solvents and electrolytic solution will react with magnesium metal, etc., and generate a passivation layer on the surface of the negative electrode that cannot conduct magnesium ions efficiently, which affects the reversible deposition and dissolution of magnesium metal, and seriously hinders the operation of rechargeable magnesium battery. In addition, the magnesium metal is also very susceptible to impurities (e.g., trace water, oxygen, carbon dioxide, etc.), in a long period of charging and discharging process, the interface between the negative electrode and the electrolytic solution is easy to be unstable, leading to the obstruction of magnesium ion conduction, which may lead to a high charging and discharging over-potential of the battery, uneven deposition and dissolution of the magnesium metal, and even the battery internal short-circuit and other problems.

At present, the development of the electrolytic solution for rechargeable magnesium batteries is still in the early stage, the existing electrolytic solution mainly includes Grignard reagent system, hexamethyldisilazido (HMDS) system, trifluoromethylsulfonimide (TFSI) system, inorganic magnesium salt system, boron-based system and the like. However, these electrolytic solutions generally suffer from complex preparation processes, low solubility of electrolyte salts, and unstable electrochemical performance, thus hindering the development of rechargeable magnesium batteries.

In view of this, there is a need to provide an electrolytic solution with a simple preparation process, excellent electrochemical performance, and high interfacial stability with the negative electrode, in order to meet the requirements for commercialization of rechargeable magnesium batteries.

A first aspect of an embodiment of the present application provides an electrolytic solution for rechargeable magnesium batteries, comprising an electrolyte salt and a non-aqueous solvent. The electrolyte salt comprises $[Mg_xM_{2x-1}P_y]$ $[Mg(OR^F)_3Q_z]$, wherein x represents an integer between 1 and 6, y represents an integer between 1 and 6, z represents an integer between 0 and 6, M represents a monovalent anion, and each $R^F$ independently represents partially fluorinated or perfluorinated C 1-C6 aliphatic hydrocarbon group, partially fluorinated or perfluorinated C6-C12 aromatic hydrocarbon group, and P and Q represent a ligand.

In the electrolytic solution of the present application, the cation of the electrolyte salt comprises $[Mg_xM_{2x-1}P_y]^+$ and the anion comprises $[Mg(OR^F)_3Q_z]^-$. In some embodiments, the cation of the electrolyte salt is $[Mg_xM_{2x-1}P_y]^+$ and the anion is $[Mg(OR^F)_3Q_z]^-$.

The inventors of the present application have found, in the course of researching electrolytic solution for rechargeable magnesium batteries, that the anhydrous magnesium salt $MgM_2$ alone (e.g., $MgCl_2$, etc.) does not readily dissociate to form cations in non-aqueous solvents and does not readily form solid electrolyte intermediate phases (i.e., SEIs) on the surface of the negative electrode that are capable of conducting magnesium ions, making it difficult for electrolytic solution employing $MgM_2$ to have excellent electrochemical performance. Although the magnesium salt $Mg(OR^F)_2$ alone can dissociate in a non-aqueous solvent to form cations and anions, the electrolytic solution thus prepared has a low ionic conductivity, thereby also making it difficult to have excellent electrochemical performance.

The inventors of the present application unexpectedly found in the course of researching the electrolytic solution for rechargeable magnesium batteries that when the electrolytic solution comprises $[Mg_xM_{2x-1}P_y]$ $[Mg(OR^F)_3Q_z]$, the electrolytic solution is able to have excellent electrochemical performance, and at the same time the interfacial stability between the electrolytic solution and the negative electrode is high, and consequently, the rechargeable magnesium battery employing the same is able to have excellent electrochemical performance and long cycle life. Although the mechanism is not clear, the inventors of the present application speculate that possible reasons include the following.

First, $[Mg_xM_{2x-1}P_y]$ $[Mg(OR^F)_3Q_z]$ has a high solubility in the electrolytic solution, and can also dissociate under the action of non-aqueous solvents in the electrolytic solution to form stable cation $[Mg_xM_{2x-1}P_y]^+$ and anion $[Mg(OR^F)_3Q_z]^-$ with high magnesium ion transport performance, thereby ensuring that the electrolytic solution of the present application has a high ionic conductivity, which in turn ensures efficient transport of magnesium ions.

Second, $[Mg_xM_{2x-1}P_y]$ $[Mg(OR^F)_3Q_z]$ helps to form a low-impedance, magnesium ion-conducting and stable SEI on the surface of the negative electrode, which on the one hand ensures efficient transmission of magnesium ions, improves the ability of the electrolytic solution to reversibly deposit and dissolve magnesium metal, and thus ensures that the electrolytic solution has excellent electrochemical performance; on the other hand, it can stabilize the interface between the negative electrode and the electrolytic solution, and reduce the direct contact between magnesium metal and impurities (e.g., trace water, oxygen, carbon dioxide, etc.), which in turn reduces the probability of problems such as high charging and discharging over-potential of battery, uneven deposition and dissolution of magnesium metal, and even battery internal short-circuit and other problems.

Third, $[Mg_xM_{2x-1}P_y]$ $[Mg(OR^F)_3Q_z]$ has good compatibility with the positive electrode material, which helps to increase the electrochemical window of the electrolytic solution.

x represents an integer between 1 and 6, i.e., x may represent 1, 2, 3, 4, 5 or 6. Optionally, x represents 1, 2, 3 or 4.

Further optionally, x represents 1, 2 or 3.

y represents an integer between 1 and 6, i.e., y may represent 1, 2, 3, 4, 5 or 6. Optionally, y represents 1, 2, 3 or 4. Further optionally, y represents 1, 2 or 3.

z represents an integer between 0 and 6. In some embodiments, z may represent 0. In some embodiments, z may represent an integer between 1 and 6, i.e., z may represent 1, 2, 3, 4, 5, or 6; optionally, z represents 1, 2, 3, or 4; further optionally, z represents 1, 2, or 3.

M represents a monovalent anion. In some embodiments, M may represent one or more of $F^-$, $Cl^-$, $Br^-$, $I^-$, $HMDS^-$ (hexamethyldisilazido ion, $[(CH_3)_3Si]_2N^-$), $CF_3SO_3^-$ (OTf), $(CF_3SO_2)_2N^-$ ($TFSI^-$). Optionally, M represents one or more of $F^-$, $Cl^-$, $Br^-$, $I^-$. Further optionally, M represents $Cl^-$.

$R^F$ represents a fluorine-containing organic group. The partially fluorinated or perfluorinated C1-C6 aliphatic hydrocarbon group includes partially fluorinated or perfluorinated C1-C6 alkyl group, partially fluorinated or perfluorinated C1-C6 alkenyl group, or partially fluorinated or perfluorinated C1-C6 alkynyl group, optionally partially fluorinated or perfluorinated C1-C6 alkyl group. The partially fluorinated or perfluorinated C6-C12 aromatic hydrocarbon group includes phenyl, C6-C12 alkylphenyl, C6-C12 alkenylphenyl, C6-C12 alkynylphenyl, C6-C12 phenylalkyl, C6-C12 phenylalkenyl, C6-C12 phenylalkynyl, and optionally partially fluorinated or perfluorinated C6-C12 aromatic hydrocarbon group includes phenyl, C6-C12 alkylphenyl, or C6-C12 phenylalkyl.

In some embodiments, each $R^F$ independently represents partially fluorinated or perfluorinated C1-C6 alkyl, phenyl, C6-C12 alkylphenyl, or C6-C12 phenylalkyl. Optionally, each $R^F$ independently represents partially fluorinated or perfluorinated methyl, ethyl, n-propyl, isopropyl, n-butyl, tert-butyl, phenyl, methylphenyl (including ortho-, meta-, para-), ethylphenyl (including ortho-, meta-, para-), n-propylphenyl (including n ortho-, meta-, para-), tert-butylphenyl (including ortho-, meta-, para-), phenylmethyl, or phenylethyl. Further, each $R^F$ independently represents perfluorinated methyl, ethyl, n-propyl, isopropyl, n-butyl, tert-butyl, phenyl, methylphenyl (including ortho-, meta-, para-), ethylphenyl (including ortho-, meta-, para-), n-propylphenyl (including ortho-, meta-, para-), tert-butylphenyl (including ortho-, meta-, para-), phenylmethyl, or phenylethyl.

In some embodiments, the three $R^F$s in $[Mg_xM_{2x-1}P_y]$ $[Mg(OR^F)_3Q_z]$ are the same.

P and Q represent the ligand, wherein the ligand P and the monovalent anion M are simultaneously involved in the coordination and form the +1 valent cationic group $[Mg_xM_{2x-1}P_y]^+$, and the ligand Q and the fluorine-containing organic group $-OR^F$ are simultaneously involved in the coordination and forms the -1 valent anionic group $[Mg(OR^F)_3Q_z]^-$.

In some embodiments, the ligand P and the ligand Q may be the same. In such case, $[Mg_xM_{2x-1}P_y]$ $[Mg(OR^F)_3Q_z]$ dissociates more readily to form the cation $[Mg_xM_{2x-1}P_y]^+$ and the anion $[Mg(OR^F)_3Q_z]^-$ and the resulting cation $[Mg_xM_{2x-1}P_y]^+$ and anion $[Mg(OR^F)_3Q_z]^-$ are more stable.

In some embodiments, the non-aqueous solvent, the ligand P and the ligand Q may be the same. Optionally, the ligand P and the ligand Q can be from a non-aqueous solvent.

In some embodiments, the non-aqueous solvent, the ligand P, and the ligand Q each independently represent one or more of an ionic liquid, or a first organic solvent.

Ionic liquids include, but are not limited to, one or more of imidazole ionic liquids, piperidine ionic liquids, or pyrrole ionic liquids. As examples, the imidazole ionic liquid may include one or more of 1-ethyl-3-methylimidazolium tetrafluoroborate, 1-ethyl-3-methylimidazolium hexafluorophosphate, or 1-ethyl-3-methylimidazolium bis(trifluoromethanesulfonyl)imide. As examples, the pyrrole ionic liquid may include N-butyl-N-methylpyrrolidinium bis(trifluoromethanesulfonyl)imide. As examples, the piperidine ionic liquids can include N-butyl-N-methylpiperidinium bis(trifluoromethanesulfonyl)imide.

The first organic solvent includes one or more of an ether solvent, an imidazole solvent, a pyridine solvent, a sulfone solvent, an ester solvent, an aromatic hydrocarbon solvent, an amide solvent, or a nitrile solvent. As an example, the ether solvent may include one or more of dioxane, tetrahydrofuran (THF), ethylene glycol dimethyl ether, diethylene glycol dimethyl ether, triethylene glycol dimethyl ether, tetraethylene glycol dimethyl ether, or polyethylene glycol dimethyl ether. As an example, the pyridine solvent may include one or more of pyridine, 2-methylpyridine, 3-methylpyridine, 4-methylpyridine, 2,6-dichloropyridine, or 2-aminopyridine. As an example, the ester solvent may include one or more of vinyl carbonate or ethyl acetate.

Optionally, in some embodiments, the ligand P and the ligand Q each independently represent an ether solvent. Further, the ligand P and ligand Q each independently represent one or more of dioxane, tetrahydrofuran (THF), ethylene glycol dimethyl ether, diethylene glycol dimethyl ether, triethylene glycol dimethyl ether, tetraethylene glycol dimethyl ether, or polyethylene glycol dimethyl ether.

In some embodiments, the concentration of $[Mg_xM_{2x-1}P_y]$ $[Mg(OR^F)_3Q_z]$ in the electrolytic solution is from 0.1 mol/L to 1.2 mol/L. For example, the concentration of $[Mg_xM_{2x-1}P_y]$ $[Mg(OR^F)_3Q_z]$ is 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1.0 mol/L, 1.1 mol/L, 1.2 mol/L, or a range consisting of any of the above values. Optionally, the concentration of $[Mg_xM_{2x-1}P_y]$ $[Mg(OR^F)_3Q_z]$ is from 0.1 mol/L to 0.8 mol/L.

Of course, the electrolytic solution of the present application does not exclude other electrolyte salts other than $[Mg_xM_{2x-1}P_y]$ $[Mg(OR^F)_3Q_z]$, and the other electrolyte salts may be electrolyte salts well known in the art suitable for the electrolytic solution of the rechargeable magnesium battery, for example, a Grignard reagent system, a hexamethyldisiliazido (HMDS) system, a trifluoromethylsulfonimide (TFSI) system, a fully inorganic magnesium salt system, or a boron-based system, and the like.

The second aspect of the embodiment of the present application provides a method for preparing an electrolytic solution comprising the following steps: S100, providing $Mg(OR^F)_2$, anhydrous $MgM_2$, and a non-aqueous solvent; and S200, reacting the $Mg(ORF)_2$, the anhydrous $MgM_2$, and the non-aqueous solvent by mixing them at 25°C to 100°C to obtain the electrolytic solution.

The preparation method of the second aspect of the present application is capable of preparing the electrolytic solution of any embodiment of the first aspect of the present application. It is to be noted that the relevant parameters of the electrolytic solution prepared by the above preparation method can be referred to the electrolytic solution provided in each embodiment of the first aspect of the present application.

The preparation method of the electrolytic solution of the present application is a simple process and can meet the requirements for commercialization of rechargeable magnesium batteries.

In some embodiments, in S200, the reaction time may be from 3h to 48h, but the present application is not limited thereto.

In some embodiments, the molar ratio of $Mg(OR^F)_2$ to anhydrous $MgM_2$ is 1:(0.5 to 3.0), optionally 1:(0.8 to 2.0). For example, the molar ratio of $Mg(OR^F)_2$ to anhydrous $MgM_2$ may be 1:0.5, 1:0.8, 1:1.0, 1:1.2, 1:1.4, 1:1.6, 1:1.8, 1:2.0, 1:2.2, 1:2.4, 1:2.6, 1:2.8, 1:3.0, or any of a range consisting of any of these values. Optionally, the molar ratio of $Mg(OR^F)_2$ to anhydrous $MgM_2$ is 1 :(0.8 to 2.0).

In some embodiments, $Mg(OR^F)_2$ is obtained by the following method: mixing $HOR^F$ and $MgR_2$ in a second organic solvent and reacting at 0°C to 200°C, and obtaining $Mg(OR^F)_2$ after drying and removing the second organic solvent, wherein $MgR_2$ represents a magnesium alcoholate or an alkyl magnesium salt.

Optionally, the reaction time is from 6h to 72h, but the present application is not limited thereto.

Optionally, $MgR_2$ is selected from magnesium methoxide, magnesium ethoxide, magnesium propoxide, dibutyl magnesium or ethyl magnesium chloride.

Optionally, the second organic solvent includes one or more of an ether solvent, an imidazole solvent, a pyridine solvent, a sulfone solvent, an ester solvent, an aromatic hydrocarbon solvent, an amide solvent, or a nitrile solvent. As an example, the ether solvent may include one or more of dioxane, tetrahydrofuran, ethylene glycol dimethyl ether, diethylene glycol dimethyl ether, triethylene glycol dimethyl ether, tetraethylene glycol dimethyl ether, or polyethylene glycol dimethyl ether. As an example, the pyridine solvent may include one or more of pyridine, 2-methylpyridine, 3-methylpyridine, 4-methylpyridine, 2,6-dichloropyridine, or 2-aminopyridine. As an example, the ester solvent may include one or more of vinyl carbonate, or ethyl acetate.

A third aspect of the present application provides a rechargeable magnesium battery comprising an electrolytic solution according to the first aspect the present application, or an electrolytic solution prepared by the method according to the second aspect of the present application, such that the rechargeable magnesium battery of the present application is capable of having excellent electrochemical performance and long cycle life.

In some embodiments, the rechargeable magnesium battery further includes a positive electrode, a negative electrode, and a separator.

The positive electrode includes a positive electrode material capable of intercalating and deintercalating magnesium ions. Optionally, the positive electrode material includes, but is not limited to, one or more of a transition metal sulfide, a transition metal oxide, a transition metal boride, or a polyanionic phosphate. As an example, the transition metal sulfide may include one or more of $TiS_2$, $MoS_2$, $WS_2$, $VS_2$, $HfS_2$, $ZrS_2$, $NbS_3$, $VS_4$, $Mg_aMo_3S_4$ (0 < a < 2), or $Mo_6S_8$. As an example, the transition metal oxide may include one or more of $V_2O_5$, $V_6O_{13}$, $MnO_2$, $Mn_2O_3$, $MoO_3$, or $WO_3$. As an example, the transition metal borides may include one or more of $TiB_2$, $MoB_2$, or $ZrB_2$.

The negative electrode includes, but is not limited to, one or more of magnesium metal, or magnesium alloy. As an example, the magnesium alloy may include one or more of a magnesium aluminum alloy, a magnesium silver alloy, or a magnesium copper alloy.

The separator is provided between the positive electrode and the negative electrode, and mainly serves to prevent the positive and negative electrodes from short-circuiting. The present application has no particular limitation on the type of separator, and any well-known porous membrane with good chemical and mechanical stability may be used. As an example, the separator includes, but is not limited to, a PE membrane, a PP membrane, a non-woven fabric, a glass fiber membrane (e.g., a GF/B membrane), or a multilayer composite membrane thereof.

In some embodiments, the rechargeable magnesium battery may be a rechargeable magnesium-sulfur battery. Optionally, the positive electrode material includes, but is not limited to, one or more of $TiS_2$, $MoS_2$, $WS_2$, $VS_2$, $HfS_2$, $ZrS_2$, $NbS_3$, $VS_4$, $Mg_aMo_3S_4$ (0 < a < 2), or $Mo_6S_8$.

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

**Comparative Example 1**

Perfluoro-tert-butanol $HOC(CF_3)_3$ and magnesium methoxide $Mg(OCH_3)_2$ were mixed, stirred and reacted in an appropriate amount of tetrahydrofuran (THF) at a molar ratio of 3:1 in a glove box under an argon atmosphere with an oxygen and water content of less than 1 ppm at an ambient temperature of 25°C for 24h, and magnesium perfluoro-tert-butoxide $Mg(pftb)_2$ was obtained by drying and removing the THF. The prepared magnesium perfluoro-tert-butoxide $Mg(pftb)_2$ was dissolved in an appropriate amount of THF to obtain the electrolytic solution, wherein the concentration of $Mg(pftb)_2$ was 0.3 mol/L.

**Comparative Example 2**

Anhydrous magnesium chloride $MgCl_2$ was dissolved in an appropriate amount of THF to obtain an electrolytic solution in a glove box with an oxygen and water content of less than 1 ppm under an argon atmosphere at 25°C, wherein the concentration of $MgCl_2$ was 0.3 mol/L.

**Example 1**

Magnesium perfluoro-tert-butoxide $Mg(pftb)_2$ was prepared according to the same method as that of Comparative Example 1, after which the prepared magnesium perfluoro-tert-butoxide $Mg(pftb)_2$ and anhydrous magnesium chloride $MgCl_2$ were stirred and reacted in an appropriate amount of THF at a molar ratio of 1:3 at an ambient temperature of 25°C for 24 h until clarification, to obtain the electrolytic solution comprising $[Mg_2Cl_3 \cdot 6THF]$ $[Mg(pftb)_3]$, in which the concentration of $[Mg_2Cl_3 \cdot 6THF]$ $[Mg(pftb)_3]$ was 0.3 mol/L.

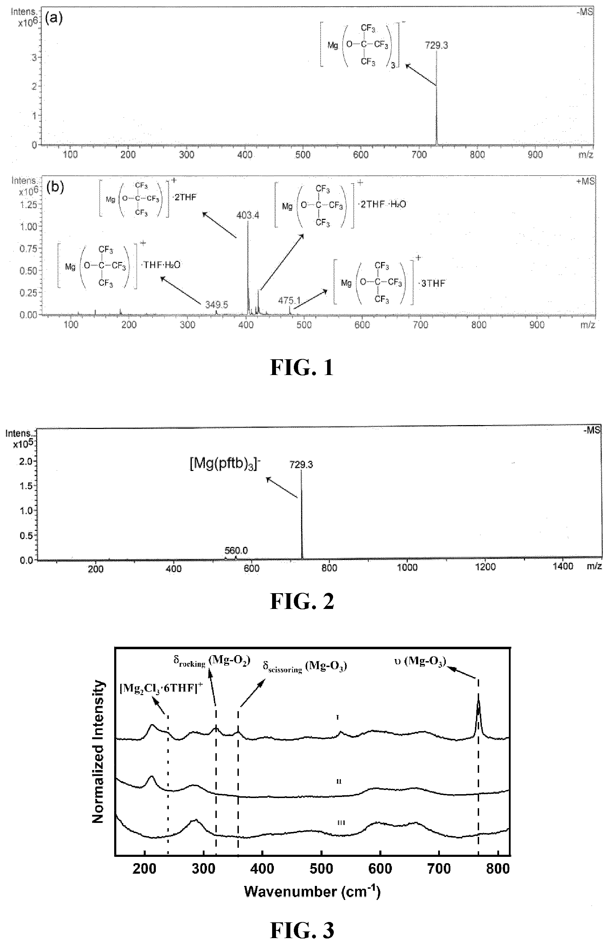

FIG. 1 illustrates the mass spectrometry test results of the electrolytic solution prepared in Example 1, with FIG. 1(a) showing the test results of the anion moiety of the electrolytic solution and FIG. 1(b) showing the test results of the cation moiety of the electrolytic solution. The mass spectrometry test results of FIG. 1 show that magnesium perfluoro-tert-butoxide is capable of dissociating to form anions and cations in THF.

FIG. 2 illustrates the mass spectrometry test results of the anion moiety of the electrolytic solution prepared in Example 1. As can be seen from the comparison of FIG. 2 with FIG. 1, $[Mg_2Cl_3 \cdot 6THF]$ $[Mg(pftb)_3]$ dissociated to form the anion $[Mg(pftb)_3]^-$.

FIG. 3 illustrates a comparison of the Raman spectroscopy test results of the electrolytic solution prepared in Example 1, in Comparative Example 2 with the THF solvent, wherein I represents the electrolytic solution prepared in Example 1, II represents the electrolytic solution prepared in Comparative Example 2, and III represents the THF solvent. The Raman spectroscopy test results of FIG. 3 show that $[Mg_2Cl_3 \cdot 6THF]$ $[Mg(pftb)_3]$ dissociated to form the cation $[Mg_2Cl_3 \cdot 6THF]^+$.

Combining the test results of FIGS. 2 and 3, the electrolytic solution prepared in Example 1 contained both the anion $[Mg(pftb)_3]^-$ and the cation $[Mg_2Cl_3 \cdot 6THF]^+$, and as a result, the inventors of the present application hypothesized that the mechanism of the reaction between magnesium perfluoro-tert-butoxide $Mg(pftb)_2$, anhydrous magnesium chloride $MgCl_2$, and THF may be as follows:

$$2Mg(pftb)_2 \xrightarrow{THF} [Mg(pftb) \cdot 2THF]^+ \; + \; [Mg(pftb)_3]^- \qquad \text{Reaction Formula 1}$$

$$[Mg(pftb) \cdot 2THF]^+ \; + \; 2MgCl_2 \xrightarrow{THF} [Mg_2Cl_3 \cdot 6THF]^+ \; + \; (pftb)MgCl \qquad \text{Reaction Formula 2}$$

$$(pftb)MgCl \xleftrightarrow{THF} [Mg(pftb) \cdot 2THF]^+ \; + \; Cl^- \qquad \text{Reaction Formula 3}$$

$$2Mg(pftb)_2 + 2MgCl_2 \xrightarrow{THF} [Mg_2Cl_3 \cdot 6THF]^+ + [Mg(pftb)_3]^- + [Mg(pftb) \cdot 2THF]^+ + Cl^- \quad \text{Total Reaction Formula}$$

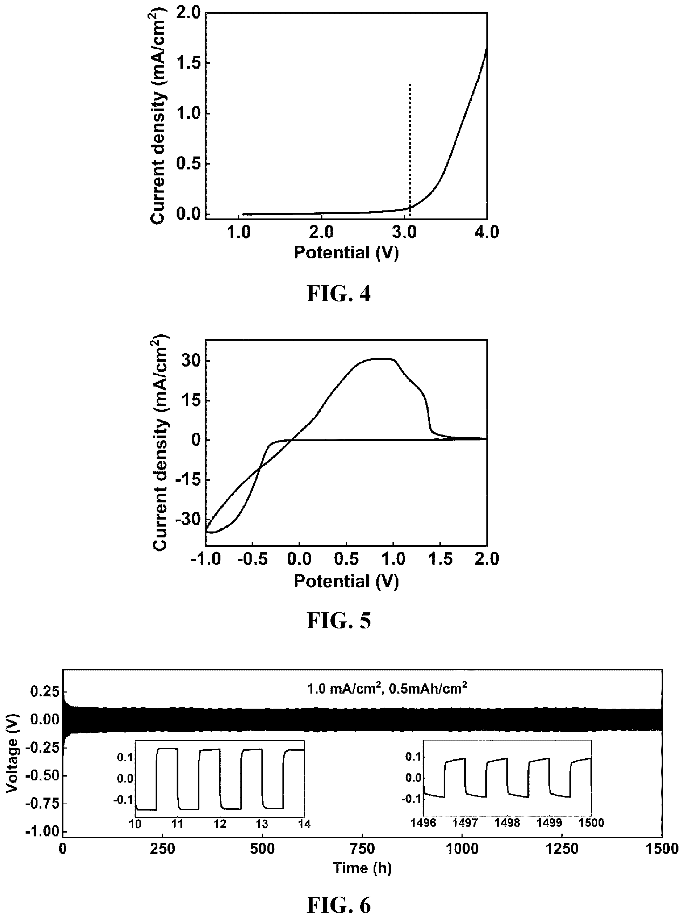

In order to test the oxidative stability and the ability to deposit and dissolve magnesium metal of the electrolytic solution of the present application, the inventors of the present application tested the linear sweep voltammetry LSV curve and cyclic voltammetry CV curve of the electrolytic solution prepared in Example 1 in a Mg//Pt half-cell (with a GF/B membrane as the separator), and the results of the tests were shown in FIGS. 4 and 5, respectively. The test results in FIGS. 4 and 5 shown that the electrolytic solution prepared in Example 1 had an oxidative stabilization window greater than 3.0 V (vs. $Mg^{2+}$/Mg) and can achieve efficient reversible deposition/dissolution of magnesium metal.

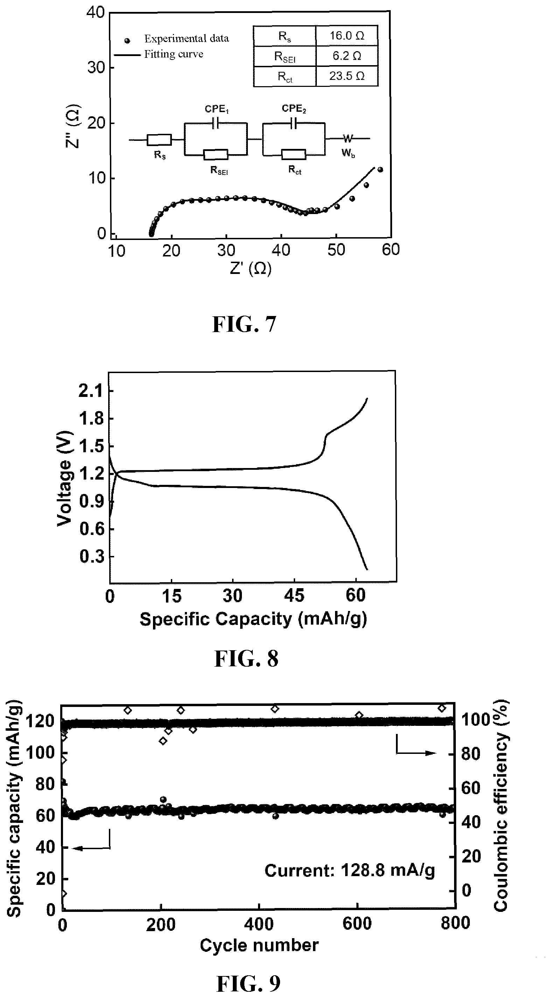

In order to test the stability of the interface between magnesium metal and the electrolytic solution, the inventors of the present application also tested the cyclic deposition/dissolution potential curves and the electrochemical impedance spectra obtained by fitting Nyquist plot through equivalent circuits of the electrolytic solution prepared in Example 1 in a Mg//Mg symmetric half-cell (with a GF/B membrane as the separator), and the results of the tests were shown in FIG. 6 and FIG. 7, respectively.

As can be seen from Fig. 6, the polarization potential of the Mg//Mg symmetric half-cells during long cyclic charging and discharging was small and did not show significant fluctuations, short circuits, and failures. The test results of FIG. 6 indicated that the electrolytic solution prepared in Example 1 was capable of having a long deposition/dissolution life. As can be seen from FIG. 7, the solid electrolyte intermediate phase resistance $R_{SEI}$ of the Mg//Mg symmetric half-cell was 6.2 $\Omega$, and the charge transfer resistance $R_{ct}$ was 23.5 $\Omega$. The test results of FIG. 7 shown that the electrolytic solution prepared in Example 1 had a long deposition/dissolution life probably due to the formation of a stable, low-impedance SEI on the surface of the magnesium metal that was capable of effectively conducting magnesium ions.

The test results of FIGS. 1 to 7 above shown that the electrolytic solution of the present application can have excellent electrochemical performance, and the interface stability between the electrolytic solution of the present application and the negative electrode was also high.

In order to illustrate the potential application of the electrolytic solution of the present application in magnesium ion batteries (full batteries), the inventors of the present application assembled a magnesium-ion battery with magnesium metal as the negative electrode, MoeSs as the positive electrode material, and GF/B as the separator together with the electrolytic solution prepared in Example 1, and tested its charging and discharging performance. FIG. 8 shown the first-cycle charging/discharging curve of the magnesium ion battery, and FIG. 9 shown the cyclic curve of the magnesium ion battery. As can be seen from FIG. 8, the magnesium ion battery had a high charging/discharging voltage plateau. From FIG. 9, it can be seen that the magnesium ion battery still had a high discharging capacity (greater than 60 mAh/g) and coulombic efficiency at a high current density of 128.8 mA/g, and can be stably charged and discharged for more than 800 cycles. The test results in FIGS. 8 and 9 shown that the electrolytic solution of the present application can be used in magnesium ion batteries, and that the magnesium ion batteries can also have the advantage of long cycle life.

The above mentioned descriptions only show particular implementations of the present application and but are not intended to limit the protection scope of the present application. Any modification or replacement readily figured out by a person skilled in the art within the technical scope disclosed in the present application shall fall within the protection scope of the present application. Therefore, the protection scope of the present application shall be determined by the protection scope of the claims.

## Claims

1. An electrolytic solution for rechargeable magnesium batteries, comprising an electrolyte salt and a non-aqueous solvent, wherein the electrolyte salt comprises $[Mg_xM_{2x-1}P_y]$ $[Mg(OR^F)_3Q_z]$, in which x represents an integer between 1 and 6,

   y represents an integer between 1 and 6,
   z represents an integer between 0 and 6,
   M represents a monovalent anion,
   each $R^F$ independently represents partially fluorinated or perfluorinated C1-C6 aliphatic hydrocarbon group, or partially fluorinated or perfluorinated C6-C12 aromatic hydrocarbon group, and
   P and Q represent a ligand, optionally P and Q are the same.

2. The electrolytic solution according to claim 1, wherein a cation of the electrolyte salt comprises $[Mg_xM_{2x-1}P_y]^+$ and an anion of the electrolyte salt comprises $[Mg(OR^F)_3Q_z]^-$.

3. The electrolytic solution according to claim 1 or 2, wherein

   M represents one or more of $F^-$, $Cl^-$, $Br^-$, $I^-$, $HMDS^-$, $CF_3SO_3^-$, or $(CF_3SO_2)_2N^-$; optionally, M represents one or more of $F^-$, $Cl^-$, $Br^-$, or $I^-$;
   each $R^F$ independently represents partially fluorinated or perfluorinated C1-C6 aliphatic hydrocarbon group, phenyl group, C6-C12 alkylphenyl group, or C6-C12 aromatic hydrocarbon group; optionally, each $R^F$ independently represents partially fluorinated or perfluorinated methyl, ethyl, n-propyl, isopropyl, n-butyl, tert-butyl, phenyl, methylphenyl, ethylphenyl, n-propylphenyl, tert-butylphenyl, phenylmethyl, or phenylethyl; and/or the non-aqueous solvent, the ligand P, the ligand Q each independently represents one or more of an ionic liquid, or a first organic solvent; optionally, the non-aqueous solvent, the ligand P, and the ligand Q are the same.

4. The electrolytic solution according to claim 3, wherein the ionic liquid comprises one or more of an imidazole ionic liquid, a piperidine ionic liquid, or a pyrrole ionic liquid;

optionally, the imidazole ionic liquid comprises one or more of 1-ethyl-3-methylimidazolium tetrafluoroborate, 1-ethyl-3-methylimidazolium hexafluorophosphate, or 1-ethyl-3-methylimidazolium bis(trifluoromethanesulfonyl) imide;
optionally, the pyrrole ionic liquid comprises N-butyl-N-methylpyrrolidinium bis(trifluoromethanesulfonyl)imide;
optionally, the piperidine ionic liquid comprises N-butyl-N-methylpiperidinium bis(trifluoromethanesulfonyl) imide; and/or
the first organic solvent comprises one or more of an ether solvent, an imidazole solvent, a pyridine solvent, a sulfone solvent, an ester solvent, an aromatic hydrocarbon solvent, an amide solvent, or a nitrile solvent;
optionally, the ether solvent comprises one or more of dioxane, tetrahydrofuran, ethylene glycol dimethyl ether, diethylene glycol dimethyl ether, triethylene glycol dimethyl ether, tetraethylene glycol dimethyl ether, or polyethylene glycol dimethyl ether;
optionally, the pyridine solvent comprises one or more of pyridine, 2-methylpyridine, 3-methylpyridine, 4-methylpyridine, 2,6-dichloropyridine, or 2-aminopyridine;
optionally, the ester solvent comprises one or more of vinyl carbonate, or ethyl acetate.

5. The electrolytic solution according to claim 1, wherein a concentration of $[Mg_xM_{2x-1}P_y]$ $[Mg(OR^F)_3Q_z]$ in the electrolytic solution is from 0.1 mol/L to 1.2 mol/L.

6. A method for preparing the electrolytic solution according to any one of claims 1-5, comprising the following steps:

S100, providing $Mg(OR^F)_2$, anhydrous $MgM_2$, and a non-aqueous solvent; and
S200, reacting the $Mg(ORF)_2$, the anhydrous $MgM_2$, and the non-aqueous solvent by mixing them at 25°C to 100°C to obtain the electrolytic solution.

7. The method according to claim 6, wherein in S200, the reaction time is from 3h to 48h.

8. The method according to claim 6 or 7, wherein a molar ratio of $Mg(OR^F)_2$ to anhydrous $MgM_2$ is 1:(0.5 to 3.0), optionally 1:(0.8 to 2.0).

9. The method according to claim 6, wherein $Mg(OR^F)_2$ is obtained by the following method: mixing $HOR^F$ and $MgR_2$ in a second organic solvent and reacting at 0°C to 200°C, and obtaining $Mg(OR^F)_2$ after drying and removing the second organic solvent, wherein $MgR_2$ represents a magnesium alcoholate or an alkyl magnesium salt;

optionally $MgR_2$ is selected from methanol magnesium methoxide, magnesium ethoxide, magnesium propoxide, dibutyl magnesium or ethyl magnesium chloride;
optionally the second organic solvent comprises one or more of an ether solvent, an imidazole solvent, a pyridine solvent, a sulfone solvent, an ester solvent, an aromatic hydrocarbon solvent, an amide solvent, or a nitrile solvent.

10. A rechargeable magnesium battery comprising the electrolytic solution according to any one of claims 1-5 or the electrolytic solution obtained by the method according to any one of claims 6-9.

**FIG. 1**

**FIG. 2**

**FIG. 3**

**FIG. 4**

**FIG. 5**

**FIG. 6**

**FIG. 7**

**FIG. 8**

**FIG. 9**

<div align="center">

**INTERNATIONAL SEARCH REPORT**

</div>

| International application No. |
|---|
| **PCT/CN2022/137121** |

| A. | CLASSIFICATION OF SUBJECT MATTER |
|---|---|
| | H01M10/0568(2010.01)i |

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 镁电池, 电解液, 全氟叔丁醇镁盐, 氟化醇, 醇盐, magnesium battery, electrolyte, perfluorinated tert-butoxide magnesium, Mg(pftb)2, fluorinated alcohol, alkoxide

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114551999 A (TSINGHUA UNIVERSITY) 27 May 2022 (2022-05-27) description, paragraphs 4-32 | 1-10 |
| X | US 2016294010 A1 (HERB, Jake et al.) 06 October 2016 (2016-10-06) description, paragraphs 3-55 | 1-10 |
| A | CN 109565074 A (SHENZHEN ZHONGKE REALPOWER INDUSTRIAL CO., LTD.) 02 April 2019 (2019-04-02) entire document | 1-10 |
| X | HERB, Jake T. et al. "A Fluorinated Dialkoxide-based Magnesium-ion Electrolyte" *Journal of Materials Chemistry A*, Vol. 5, No. 17, 12 April 2017 (2017-04-12), ISSN: 2050-7488, p. 7801, left column, paragraph 1 to p. 7805, right column, paragraph 1 | 1-10 |
| PX | XIAO, Jianhua et al. "Stable Solid Electrolyte Interphase In Situ Formed on Magnesium-Metal Anode by using a Perfluorinated Alkoxide-Based All-Magnesium Salt Electrolyte" *Advanced Materials*, Vol. 34, No. 30, 23 June 2022 (2022-06-23), ISSN: 0935-9648, p. 1, left column, paragraph 1 to p. 8, left column, paragraph 1 | 1-10 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 February 2023** | **03 March 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 114551999 | A | 27 May 2022 | None | | | |
| US | 2016294010 | A1 | 06 October 2016 | US | 2020083565 | A1 | 12 March 2020 |
| CN | 109565074 | A | 02 April 2019 | WO | 2017206062 | A1 | 07 December 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210134125